# EUROPEAN PATENT APPLICATION

(11) **EP 4 797 410 A1**
(43) Date of publication of application: **26.08.2026**
(21) Application number: 23954979.3
(22) Date of filing: 17.10.2023
(51) Int. Cl.: H01M 50/291, H01M 50/211, H01M 50/342

(54) **BATTERY PACK AND BATTERY PACK MODULE**

(71) Applicant: JTEKT CORPORATION, Kariya-shi, Aichi 448-8652 (JP)
(72) Inventor: FUKADA, Daisuke, Kariya-shi, Aichi 448-8652 (JP); NISHI, Koji, Kariya-shi, Aichi 448-8652 (JP); MIYAKE, Junya, Kariya-shi, Aichi 448-8652 (JP)
(74) Representative: Winter, Brandl - Partnerschaft mbB
(86) International application number: PCT/JP2023/037525
(87) International publication number: WO 2025/083777

(57) **Abstract**

(Problem) To provide a battery pack and a battery pack module provided with the battery pack, the battery pack including a plurality of pouch-type battery cells having a configuration in which a power storage part for storing a charge is sealed in an exterior material together with an electrolytic solution, wherein it is possible release the internal pressure of the pouch-type battery cells when the internal pressure becomes too high.

(Solution) A battery pack 100 includes: a plurality of pouch-type battery cells 4; and an interposed plate 8 interposed between the pouch-type battery cells 4. The pouch-type battery cells 4 have: a power storage part 5 and an electrolytic solution 6; and an exterior material 7 for sealing the electrolytic solution 6. The interposed plate 8 is provided with a protrusion 81 for breaking the exterior material 7 when the pouch-type battery cells 4 have expanded.

## Description

### Technical Field

The present invention relates to a battery pack including a plurality of pouch-type battery cells, and a battery pack module including the battery pack.

### Background Art

A known vehicle including, for example, an electric motor as a drive source, is equipped with a secondary battery such as a lithium ion battery or the like. A secondary battery module described in Patent Literature 1 includes a plurality of secondary batteries, a case for accommodating the plurality of secondary batteries, a pressing plate including a plurality of electrode terminal holes formed therein through which electrode terminals of the secondary batteries are inserted, and a protective cover for covering the pressing plate. The case, the pressing plate, and the protective cover make up an accommodation housing. The pressing plate is attached to an opening portion of the case through which the plurality of secondary batteries is inserted. Each of the secondary batteries is provided with a relief valve that ruptures when internal temperature rises and gas is generated inside, and internal pressure reaches a predetermined pressure, thereby relieving the internal pressure. The pressing plate is provided with a protrusion that pierces the relief valve in a case in which the relief valve expands due to internal pressure, just in case the relief valve does not rupture even when the internal pressure of the secondary battery reaches a predetermined value.

Also, in recent years, pouch-type battery cells, in which a power storage part including a cathode, an anode, and a separator is sealed in an exterior material along with an electrolytic solution, have come to be used as secondary batteries for vehicles, such as described in Patent Literature 2, for example. The exterior material is, for example, in the form of a sack made by overlaying laminate films and sealing the peripheral edge portion by thermal fusing.

### Citation List

### Patent Literature

Patent Literature 1: JP 2008-270032 A
Patent Literature 2: JP 2023-34053 A

### Summary of Invention

### Technical Problem

In a battery pack configured by arraying a plurality of pouch-type battery cells like those described above, the peripheral edge portions of the exterior material are sealed by thermal fusing, and accordingly the internal pressure cannot be released using a configuration similar to that of the accommodation housing described in Patent Literature 1.

Accordingly, an object of the present invention is to provide a battery pack including a plurality of pouch-type battery cells of a configuration in which a power storage part for storing electric charge is sealed in an exterior material together with an electrolytic solution, which is capable of releasing internal pressure when the internal pressure of the pouch-type battery cells becomes high, and a battery pack module including this battery pack.

### Solution to Problem

In order to achieve the above object, the present invention provides a battery pack including a plurality of pouch-type battery cells, and an interposed plate disposed interposed between the pouch-type battery cells, in which each of the pouch-type battery cells includes a power storage part, an electrolytic solution, and an exterior material that seals in the electrolytic solution, and the interposed plate is provided with a protrusion that ruptures the exterior material when the pouch-type battery cell expands.

Also, in order to achieve the above object, the present invention also provides a battery pack module including the above battery pack, and a case for accommodating the battery pack.

### Advantageous Effects of Invention

With the battery pack and the battery pack module according to the present invention, when internal pressure of the pouch-type battery cells becomes high, the protrusion of the interposed plate can pierce the exterior material, thereby releasing this internal pressure.

### Brief Description of Drawings

(FIG. 1) FIG. 1 is an external view illustrating a battery pack module according to an embodiment of the present invention.
(FIG. 2) FIG. 2 is a sectional view taken along line A-A in FIG. 1.
(FIG. 3) FIG. 3 is a sectional view taken along line B-B in FIG. 1.
(FIG. 4) FIG. 4 is a sectional view illustrating a structure of a pouch-type battery cell.
(FIG. 5) FIG. 5 is an exploded perspective view of a battery pack.
(FIG. 6) FIG. 6 is a perspective cross-sectional view illustrating a portion of the battery pack.
(FIG. 7) FIG. 7 is a perspective view illustrating an interposed plate.

### Description of Embodiments

### (Embodiment)

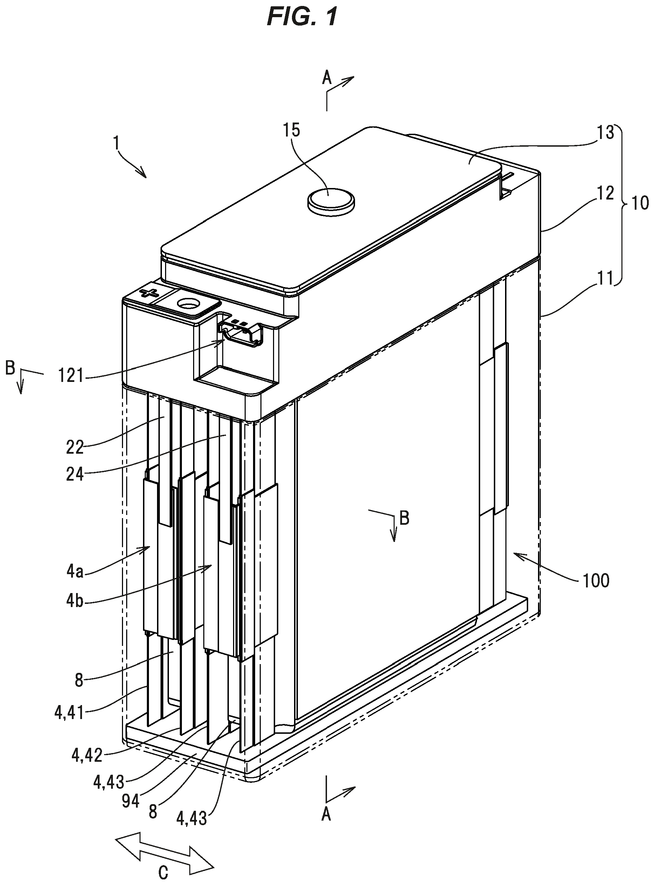

An embodiment of the present invention will be described with reference to FIG. 1 to FIG. 7. Note that the embodiment described below is given as a preferred specific example of carrying out the present invention, and includes portions that specifically exemplify various technical matters that are technically preferable, but the technical scope of the present invention is not limited to this specific embodiment.

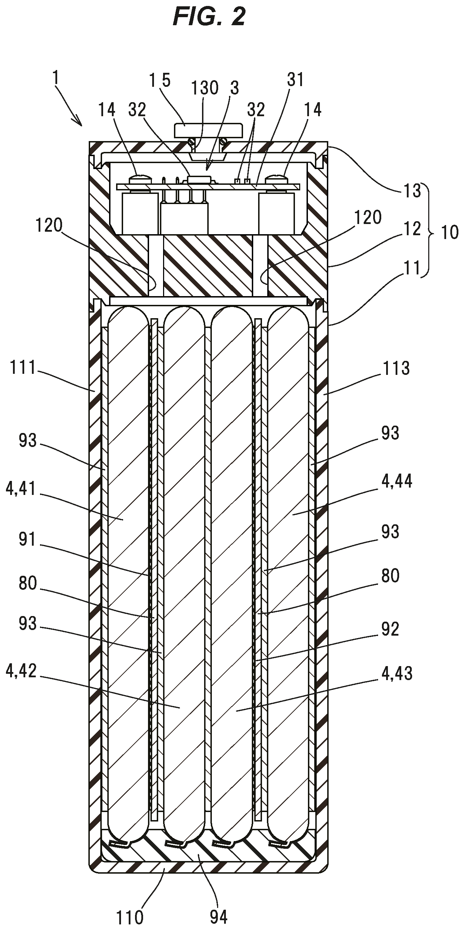

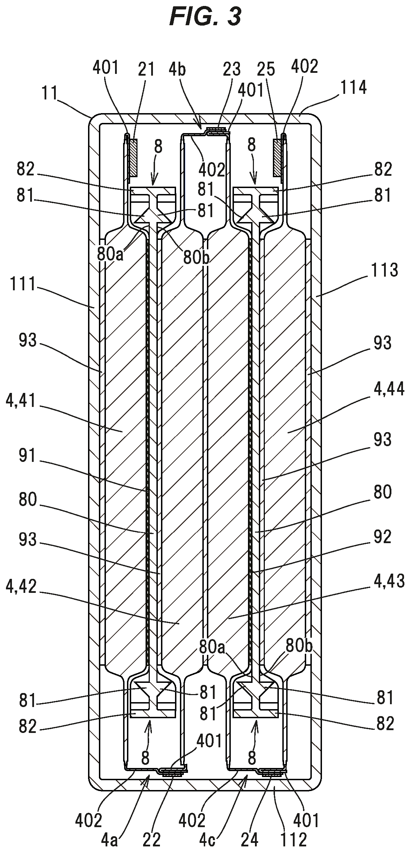

FIG. 1 is an external view illustrating a battery pack module 1 according to the embodiment of the present invention. FIG. 2 is a sectional view of the battery pack module 1 taken along line A-A in FIG. 1. FIG. 3 is a sectional view of the battery pack module 1 taken along line B-B in FIG. 1. The battery pack module 1 is used as a power source for a vehicle including an electric motor as a driving source for traveling, for example.

The battery pack module 1 includes a case 10, a battery pack 100 that is accommodated in the case 10, first to fifth bus bars 21 to 25, and a control circuit 3. The case 10 is made up of first to third case members 11 to 13 made of a thermoplastic resin such as, for example, PBT (polybutylene terephthalate) or the like. The first case member 11 and the second case member 12, and the second case member 12 and the third case member 13 are each welded together by laser welding, so as to be airtight.

The first case member 11 accommodates the battery pack 100. In FIG. 1, the first case member 11 is indicated by long dashed double-short dashed lines, and the battery pack 100 accommodated inside is indicated by continuous lines. The battery pack 100 includes a plurality of pouch-type battery cells 4. The second case member 12 accommodates the control circuit 3.

The control circuit 3 monitors and controls voltage, current, and temperature of each of the pouch-type battery cells 4, and communicates with a higher-order control device via a communication line connected to a connector portion 121 provided in the second case member 12. The control circuit 3 includes a board 31, and a plurality of electronic components 32 such as integrated circuits (ICs), resistors, capacitors, and so forth, mounted on the board 31. The board 31 is fixed to the second case member 12 by a plurality of bolts 14.

As illustrated in FIG. 2, the second case member 12 is provided with a communication hole 120 for communication of inside space of the first case member 11 and inside space of the second case member 12. The third case member 13 includes a through hole 130 formed therein, and the through hole 130 is closed off by a cap 15. The cap 15 suppresses foreign matter from entering inside of the case 10 through the through hole 130. When difference in air pressure between inside and outside of the case 10 becomes great, air flows through the through hole 130, and the difference in air pressure is alleviated.

In the present embodiment, the battery pack 100 includes four pouch-type battery cells 4. The pouch-type battery cells 4 are secondary batteries that are capable of being charged and discharged. Each of the pouch-type battery cells 4 includes a cathode tab 401 and an anode tab 402. The four pouch-type battery cells 4 are arrayed in an array direction indicated by arrow C in FIG. 1. This array direction corresponds to a width direction of the first case member 11. Hereinafter, in a case in which description is made identifying each of the four pouch-type battery cells 4, the four pouch-type battery cells 4 will be referred to as first to fourth pouch-type battery cells 41 to 44, respectively. The cathode tab 401 and the anode tab 402 of each of the first to fourth pouch-type battery cells 41 to 44 are electrically connected in series.

The cathode tab 401 of the first pouch-type battery cell 41 is connected to the first bus bar 21. The second bus bar 22 is connected to a connection portion 4a between the anode tab 402 of the first pouch-type battery cell 41 and the cathode tab 401 of the second pouch-type battery cell 42. The third bus bar 23 is connected to a connection portion 4b between the anode tab 402 of the second pouch-type battery cell 42 and the cathode tab 401 of the third pouch-type battery cell 43. The fourth bus bar 24 is connected to a connection portion 4c between the anode tab 402 of the third pouch-type battery cell 43 and the cathode tab 401 of the fourth pouch-type battery cell 44. The anode tab 402 of the fourth pouch-type battery cell 44 is connected to the fifth bus bar 25. The control circuit 3 receives input of potential of each of the first to fifth bus bars 21 to 25.

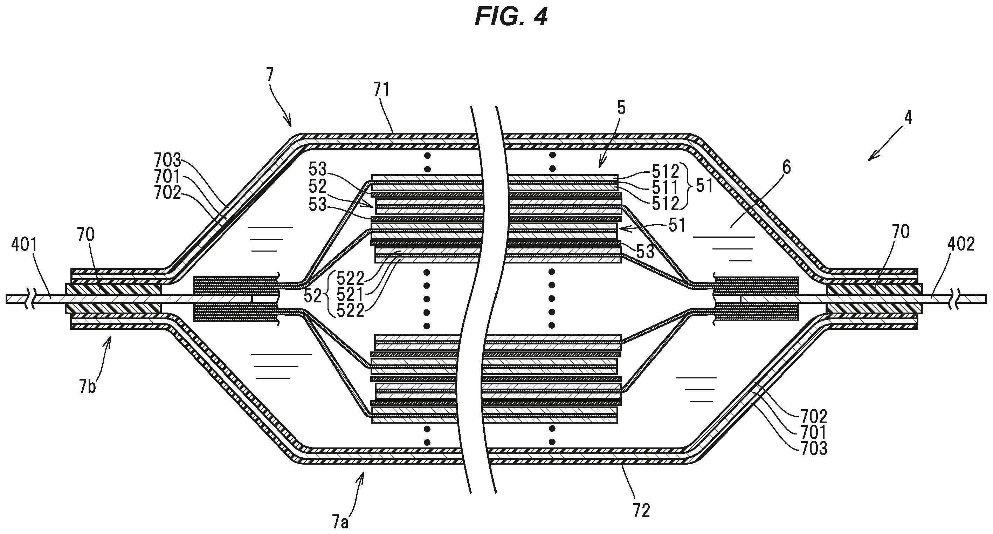

FIG. 4 is a sectional view that schematically illustrates an example of a structure of the pouch-type battery cell 4. The pouch-type battery cell 4 is a lithium-ion secondary battery that uses lithium ions as electrolyte ions, and more specifically, is a lithium-ion capacitor.

The pouch-type battery cell 4 includes the cathode tab 401, the anode tab 402, a power storage part 5 that stores an electric charge, an electrolytic solution 6 that contains an organic solvent (nonaqueous solvent) and an electrolyte, and an exterior material 7 that seals in the electrolytic solution 6. The power storage part 5 includes a plurality of cathode plates 51 and a plurality of anode plates 52 disposed alternately, and a plurality of separators 53 disposed between the plurality of cathode plates 51 and the plurality of anode plates 52.

Each cathode plate 51 includes a current collector 511 in the form of a thin plate, and cathode active material layers 512 coated on both sides of the current collector 511. The cathode active material layers 512 contain a cathode active material with a great specific surface area and high electrical conductivity, and a conductive aid for raising the electrical conductivity of the cathode active material layers 512. The anode plate 52 includes a current collector 521 in the form of a thin plate, and anode active material layers 522 coated on both sides of the current collector 521. The anode active material layers 522 include an anode active material that is capable of intercalating and capable of deintercalating lithium ions Li⁺. The anode active material is pre-doped with lithium ions (Li⁺) during production.

The electrolytic solution 6 is accommodated in the exterior material 7 together with the plurality of cathode plates 51, the plurality of anode plates 52, and the plurality of separators 53, and is sealed within the exterior material 7. The cathode tab 401 is electrically connected to the current collector 511 of each of the plurality of cathode plates 51 inside the exterior material 7. The anode tab 402 is electrically connected to the current collector 521 of each of the plurality of anode plates 52 inside the exterior material 7. A portion of the cathode tab 401 and a portion of the anode tab 402 are exposed to outside of the exterior material 7. A heat-fusible resin 70 is interposed between the cathode tab 401, the anode tab 402, and the exterior material 7.

The exterior material 7 is made of a laminate film including a core sheet 701, an inner sheet 702 bonded to an inner face of the core sheet 701, and an outer sheet 703 bonded to an outer face of the core sheet 701. The core sheet 701 is aluminum foil. The inner sheet 702 is a resin sheet such as polypropylene or the like. The outer sheet 703 is a resin sheet such as a nylon PET film or the like.

Also, the exterior material 7 includes a front face portion 71 and a rear face portion 72 that sandwich the power storage part 5, and the front face portion 71 and the rear face portion 72 are heat-fused to each other at a peripheral edge portion of the pouch-type battery cell 4. In the following description, an accommodating portion 7a of the exterior material 7 refers to a portion that accommodates the power storage part 5 together with the electrolytic solution 6, and a peripheral edge seal portion 7b of the exterior material 7 refers to a portion that is sealed so as to surround the accommodating portion 7a.

When the pouch-type battery cell 4 is in an overheated state due to an increase in temperature caused by overcharging or overdischarging, for example, there are cases in which the electrolytic solution 6 vaporizes and expands. Further, when the amount of expanding of the pouch-type battery cells 4 becomes excessive, there is a risk that the case 10 will be damaged, and accordingly the battery pack 100 according to the present embodiment includes an interposed plate 8 that is provided with a protrusion 81 that perforates the exterior material 7 when the pouch-type battery cells 4 expand, thereby releasing the pressure inside the exterior material 7.

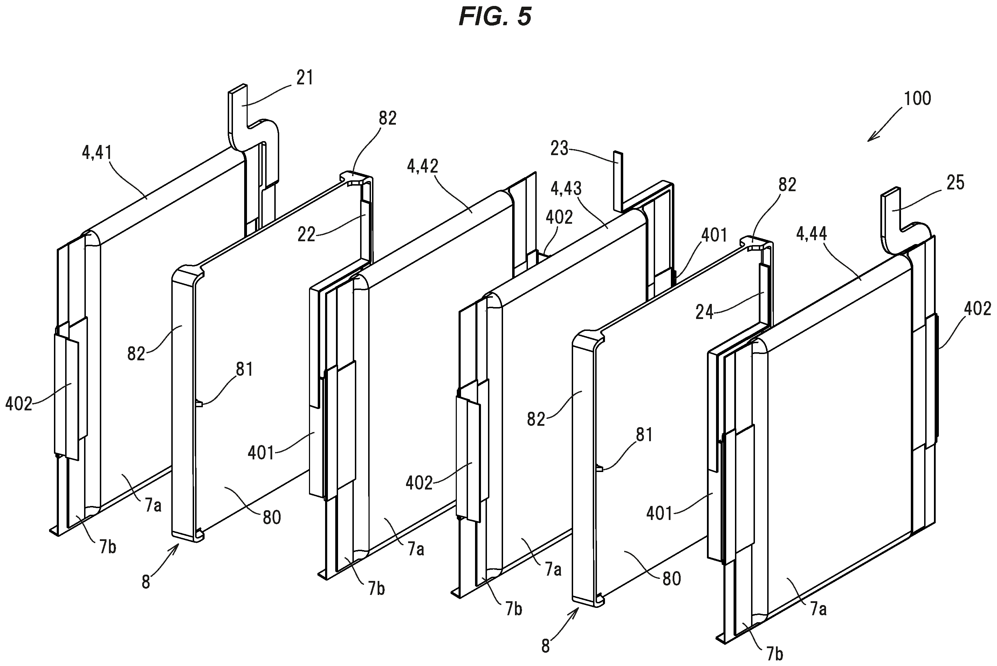

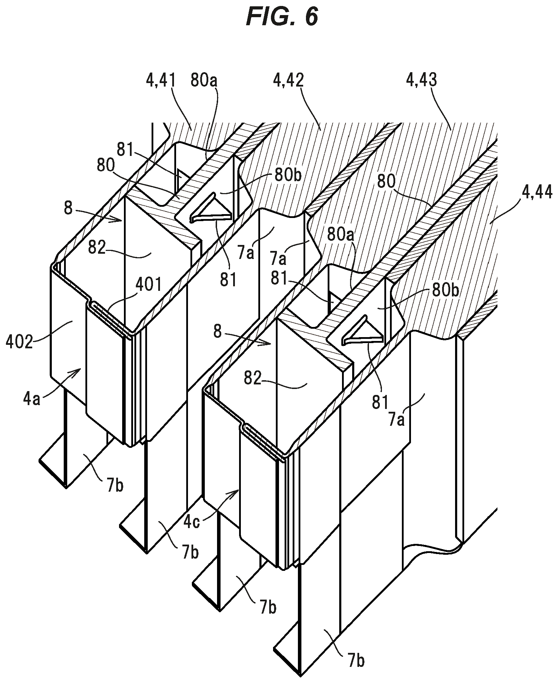

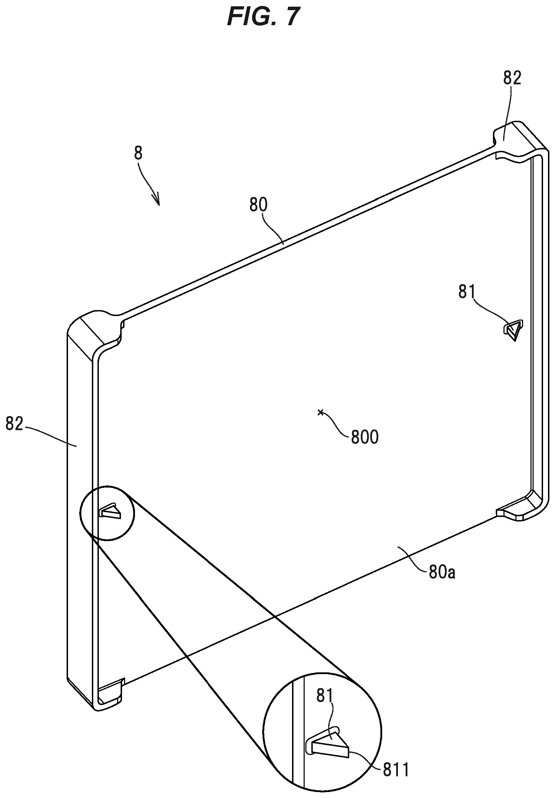

FIG. 5 is an exploded perspective view of the battery pack 100. FIG. 6 is a perspective cross-sectional view illustrating a portion of the battery pack 100. FIG. 7 is a perspective view illustrating the interposed plate 8.

In the present embodiment, interposed plates 8 are each disposed between the first pouch-type battery cell 41 and the second pouch-type battery cell 42, and between the third pouch-type battery cell 43 and the second pouch-type battery cell 44. The interposed plate 8 is, for example, a resin molded article that has been injection-molded. Note, however, that the interposed plate 8 is not limited to being made of resin, and may be made of metal, for example.

The interposed plate 8 integrally includes the flat plate portion 80, a plurality of protrusions 81 provided on both faces of the flat plate portion 80, and spacing maintaining portions 82 provided on end portions of the flat plate portion 80. The flat plate portion 80 has a rectangular shape of a size corresponding to the size of the pouch-type battery cell 4. The plurality of protrusions 81 is provided so as to protrude in a thickness direction of the flat plate portion 80 from one face 80a and another face 80b of the flat plate portion 80. A distal end portion 811 (see FIG. 7) of each of the protrusions 81 is formed to be sufficiently sharp to pierce the exterior material 7. When the pouch-type battery cell 4 expands, the exterior material 7 is ruptured by the protrusions 81, allowing gas generated inside the exterior material 7 to be discharged to the outside of the exterior material 7, thereby preventing the exterior material 7 from bursting due to internal pressure.

The protrusions 81 are provided at positions facing the peripheral edge seal portion 7b of the exterior material 7 in the array direction of the plurality of pouch-type battery cells 4. More specifically, four protrusions 81 are provided on the interposed plate 8 such that the distal end portion 811 of each of the protrusions 81 faces an end portion of the peripheral edge seal portion 7b of the exterior material 7 on the accommodating portion 7a side.

On one face 80a side of the flat plate portion 80, the protrusions 81 are provided at two locations across the accommodating portion 7a of the exterior material 7 in a direction parallel to the flat plate portion 80. On the other face 80b side of the flat plate portion 80, the protrusions 81 are similarly provided at two locations across the accommodating portion 7a of the exterior material in a direction parallel to the flat plate portion 80. Note that the protrusions 81 on the interposed plates 8 are not limited to this arrangement, and one protrusion 81 may be provided on each of the one face 80a side and the other face 80b side of the flat plate portion 80, or three or more protrusions 81 may be provided on each. Note, however, that it is desirable to provide the protrusions 81 on at least at two locations on the one face 80a side and the other face 80b side of the flat plate portion 80, across the accommodating portion 7a of the exterior material 7, such that the gas inside the exterior material 7 can be discharged in a sure manner when the pouch-type battery cells 41 to 44 expand.

In the present embodiment, two protrusions 81 are provided on each of the one face 80a side and the other face 80b side of the flat plate portion 80, at positions symmetrical with respect to a center position 800 (see FIG. 7) of the flat plate portion 80, which is aligned with a center portion of the accommodating portion 7a, along the array direction of the plurality of pouch-type battery cells 4.

The spacing maintaining portion 82 maintains the distance between the peripheral edge seal portions 7b of two pouch-type battery cells 4 that sandwich the interposed plate 8. More specifically, of the two interposed plates 8 of the battery pack 100, the spacing maintaining portion 82 of one of the interposed plates 8 that is disposed interposed between the first pouch-type battery cell 41 and the second pouch-type battery cell 42, maintains the gap between the peripheral edge seal portion 7b of the exterior material 7 of the first pouch-type battery cell 41 and the peripheral edge seal portion 7b of the exterior material 7 of the second pouch-type battery cell 42. The spacing maintaining portion 82 of the other interposed plate 8 that is disposed interposed between the third pouch-type battery cell 43 and the fourth pouch-type battery cell 44, maintains the distance between the peripheral edge seal portion 7b of the exterior material 7 of the third pouch-type battery cell 43 and the peripheral edge seal portion 7b of the exterior material 7 of the fourth pouch-type battery cell 44.

The spacing maintaining portion 82 is provided at a position farther from the accommodating portion 7a of the exterior material 7 than the protrusion 81. In the present embodiment, the spacing maintaining portion 82 is provided at each of both end portions in a long side direction of the flat plate portion 80 that is rectangular. The spacing maintaining portion 82 suppresses the distal end portion 811 of the protrusion 81 from coming into contact with the exterior material 7 due to vibrations, for example.

One of the interposed plates 8 is fixed to the first pouch-type battery cell 41, and the other interposed plate 8 is fixed to the third pouch-type battery cell 43. In the present embodiment, as illustrated in FIG. 3, the flat plate portion 80 of one of the interposed plates 8 is fixed to the exterior material 7 of the first pouch-type battery cell 41 by double-sided tape 91, and the other interposed plate 8 is fixed to the exterior material 7 of the third pouch-type battery cell 43 by double-sided tape 92.

As illustrated in FIG. 2 and FIG. 3, the first case member 11 that accommodates the battery pack 100 is a rectangular cuboid including a bottom wall portion 110 and four side wall portions 111 to 114, and the battery pack 100 is disposed between a pair of the side wall portions 111, 113 that face each other in the array direction of the first to fourth pouch-type battery cells 41 to 44. Spacers 93 that are sheet-like in form are each disposed between the first pouch-type battery cell 41 and the side wall portion 111, between one of the interposed plates 8 and the second pouch-type battery cell 42, between the second pouch-type battery cell 42 and the third pouch-type battery cell 43, between the other of the interposed plates 8 and the fourth pouch-type battery cell 44, and between the fourth pouch-type battery cell 44 and the side wall portion 113.

A support plate 94 that supports the first to fourth pouch-type battery cells 41 to 44 is disposed in contact with the bottom wall portion 110 at a bottom portion of the first case member 11. The support plate 94 includes grooves formed therein that each accommodates a portion of the peripheral edge seal portion 7b of the exterior material 7 of respective first to fourth pouch-type battery cells 41 to 44.

Note that in the present embodiment, the battery pack 100 includes four pouch-type battery cells 4, but the number of pouch-type battery cells 4 in the battery pack 100 is not limited to four, and the battery pack 100 may have a greater number of pouch-type battery cells 4. In a case in which the battery pack 100 includes four, or four or more pouch-type battery cells 4, and the order of array of each of the pouch-type battery cells 4, in the array direction of the plurality of pouch-type battery cells 4, is expressed as N (N is a natural number), the interposed plate 8 is disposed between the 2N'th and 2N-1'th pouch-type battery cells 4, and no interposed plate 8 is placed between the 2N'th and 2N+1'th pouch - type battery cells 4. This enables the number of interposed plates 8 to be reduced as compared to a case in which an interposed plate 8 is disposed between each of two pouch-type battery cells 4 that are adjacent in the array direction, and thus the battery pack 100 can be made smaller and lighter.

Also, a pouch-type battery cell 4 is preferably fixed to at least one of the 2N'th pouch-type battery cell 4 and the 2N-1'th pouch-type battery cell 4. Fixing the interposed plate 8 to the pouch-type battery cell 4 enables the positions of the protrusions 81 relative to the exterior material 7 of the pouch-type battery cell 4 to be maintained appropriately. The fixing means for fixing the exterior material 7 to the pouch-type battery cells 4 is not limited to the double-sided tape 91 and 92 described above, and the interposed plate 8 may be bonded to the exterior material 7 of the pouch-type battery cells 4, for example.

### (Advantages of Embodiment)

According to the embodiment described above, when the internal pressure of the pouch-type battery cell 4 increases and the exterior material 7 expands, the exterior material 7 is pressed against the protrusion 81, causing a hole to be formed in the exterior material 7, whereby the gas inside the exterior material 7 can be discharged. This enables the gas inside the exterior material 7 to be discharged without providing the exterior material 7 with a relief valve that opens when the pressure in the pouch-type battery cell 4 rises, whereby costs of the battery pack 100 can be reduced. Note, however, that the relief valve may be provided in the exterior material 7, and the interposed plate 8 may be disposed adjacent to the pouch-type battery cell 4, just in case that the relief valve fails to open for some reason. In this case, reliability of the battery pack 100 is improved.

### (Appendices)

Although the present invention has been described above based on the embodiment, the invention according to the claims is not limited to this embodiment. It should also be noted that not all of the combinations of features described in the embodiments are necessarily essential to the means for solving the problem according to the invention. Also, the present invention can be implemented in various modified forms as appropriate, such as by omitting portions of the configurations, or by adding or substituting configurations, without departing from the spirit and scope of the invention. Furthermore, portions of the configurations of the above-described plurality of embodiments can be combined with each other, and can also be modified as follows, for example.

In the above embodiment, the present invention has been described as a case of being applied to a lithium-ion capacitor that can be charged and discharged at a higher speed than a typical lithium-ion battery, but the present invention is not limited to this, and can also be applied to lithium-ion batteries, and secondary batteries of other configurations. Also, the battery pack module 1 and the battery pack 100 are not limited to being used in vehicles, and can also be used for a wide variety of purposes.

Also, in the above embodiment, description has been made regarding a case in which the battery pack 100 includes four pouch-type battery cells 4, but the battery pack 100 may also be configured with one interposed plate 8 being disposed between two pouch-type battery cells 4.

### Reference Signs List

1 BATTERY PACK MODULE
10 CASE
100 BATTERY PACK
4 POUCH-TYPE BATTERY CELL
5 POWER STORAGE PART
6 ELECTROLYTIC SOLUTION
7 EXTERIOR MATERIAL
7a ACCOMMODATING PORTION
7b PERIPHERAL EDGE SEAL PORTION
8 INTERPOSED PLATE
80 FLAT PLATE PORTION
81 PROTRUSION
82 SPACING MAINTAINING PORTION

## Claims

1. A battery pack, comprising:
a plurality of pouch-type battery cells; and
an interposed plate disposed interposed between the pouch-type battery cells, wherein
each of the pouch-type battery cells includes a power storage part, an electrolytic solution, and an exterior material that seals in the electrolytic solution, and
the interposed plate is provided with a protrusion that ruptures the exterior material when the pouch-type battery cell expands.

2. The battery pack according to claim 1, wherein:
the exterior material includes an accommodating portion that accommodates the power storage part along with the electrolytic solution, and a peripheral edge seal portion that is sealed so as to surround the accommodating portion; and
the protrusion is provided at a position facing the peripheral edge seal portion of the exterior material.

3. The battery pack according to claim 2, wherein the interposed plate is provided with the protrusion at least at two locations across the accommodating portion of the exterior material.

4. The battery pack according to claim 2, wherein the interposed plate is provided with a spacing maintaining portion that maintains a spacing between the peripheral edge seal portions of the two pouch-type battery cells that sandwich the interposed plate.

5. The battery pack according to claim 4, wherein the spacing maintaining portion is provided at a position farther from the accommodating portion than the protrusion.

6. The battery pack according to claim 1, wherein the protrusions are provided on both sides of the interposed plate.

7. The battery pack according to claim 6, including at least four of the pouch-type battery cells that are arrayed in a predetermined array direction, wherein
when expressing an order of array of each of the pouch-type battery cells in the array direction as N (N is a natural number), the interposed plate is disposed between the 2N'th and 2N-1'th pouch-type battery cells, and the interposed plate is not disposed between the 2N'th and 2N+1'th pouch-type battery cells.

8. The battery pack according to claim 7, wherein the interposed plate is fixed to at least one of the 2N'th pouch-type battery cell and the 2N-1'th pouch-type battery cell in the array direction.

9. A battery pack module, comprising:
the battery pack according to any one of claims 1 to 8; and
a case that accommodates the battery pack.
